**Europäisches Patentamt**

**European Patent Office**

**Office européen des brevets**

(19)

(11) Veröffentlichungsnummer: **0 177 954**
**A2**

(12) # EUROPÄISCHE PATENTANMELDUNG

(21) Anmeldenummer: **85112838.9**

(51) Int. Cl.⁴: **G 06 K 11/06,** H 01 H 25/04

(22) Anmeldetag: **10.10.85**

(30) Priorität: **12.10.84 DE 3437456**

(71) Anmelder: **John Hall Trading GmbH, Spaldingstrasse 1, D-2000 Hamburg 1 (DE)**

(43) Veröffentlichungstag der Anmeldung: **16.04.86 Patentblatt 86/16**

(72) Erfinder: **Frank, Michael, Säbener Strasse 11, D-8000 München 90 (DE)**

(74) Vertreter: **Stach, Harald, Dr. Dipl.-Chem., Adenauerallee 30, D-2000 Hamburg 1 (DE)**

(84) Benannte Vertragsstaaten: **CH FR GB IT LI NL SE**

(54) Steuervorrichtung für Computer.

(57) Die Erfindung betrifft eine Steuervorrichtung für Computer, insbesondere zur Cursor-Steuerung auf einem Bildschirm, mit einem manuell zwischen einer Grundstellung und mehreren Schaltstellungen bewegbaren Handgriff und jeweils in vorbestimmten Schaltstellungen des Handgriffs betätigten Schaltorganen zur Erzeugung entsprechender Steuersignale an den Computer. Die ganze Steuervorrichtung ist als frei in der Bedienungshand zu tragendes Griffteil mit einem flexiblen Verbindungskabel oder einer drahtlosen Signal-Übertragungsvorrichtung zum Computer ausgebildet. Das Griffteil umfasst mindestens zwei elektrische Neigungsschalter mit einer elektrisch leitenden Flüssigkeit zur neigungsabhängigen leitenden Verbindung von Anschlüssen. Die Neigungsschalter sind gegeneinander so geneigt angeordnet, dass in der Grundstellung kein Steuersignal, beim Neigen jedoch ein der Neigungsrichtung entsprechendes Steuersignal erzeugt wird.

Aktenzeichen:   Neuanmeldung
Anmelder:       John Hall Trading GmbH

---

### Steuervorrichtung für Computer

---

Die Erfindung betrifft eine Steuervorrichtung für Computer, insbesondere zur Cursor-Steuerung auf einem Bildschirm, mit einem manuell zwischen einer Grundstellung und mehreren Schaltstellungen bewegbaren Handgriff und jeweils in vorbestimmten Schaltstellungen des Handgriffs betätigten Schaltorganen zur Erzeugung entsprechender Steuersignale an den Computer.

Aus der DE-OS 33 20 149 ist eine Steuervorrichtung der vorstehend definierten Konstruktion für Videospiele bekannt, bei welcher der nach Art eines Steuerknüppels ausgebildete, eine Längsachse aufweisende Handgriff an seinem unteren Ende über konvexe Lagerflächen in einem Gehäuse allseitig frei verschwenkbar gelagert ist, wobei eine am unteren Ende des Handgriffs angebrachte Platte vier Schalter-Betätigungsglieder aufweist, die beim Verschwenken des Handgriffs jeweils zugeordnete, im Gehäuse stationär angeordnete Schalter betätigen. Am freien Ende des Handgriffs ist zusätzlich ein mit dem Daumen betätigbarer Drucktastenschalter angeordnet. Diese auch in verschiedenen anderen Ausführungsformen bekannte Steuervorrichtung hat
den Nachteil, daß bei der Betätigung das den schwenkbaren Handgriff umschließende Gehäuse leicht unbeabsichtigt mit bewegt
wird, sofern dieses nicht durch besondere Mittel ortsfest montiert ist. In der Praxis muß die Bedienungsperson mit einer
Hand das Gehäuse festhalten und mit der anderen Hand den Handgriff betätigen.

Es war daher Aufgabe der Erfindung, eine Steuervorrichtung
für Computer der in der Einleitung genannten Art zu schaffen,
welche mit einfachen, unaufwendigen Mitteln eine schnelle,
genau dosierbare und zuverlässige Einhandbedienung gestattet.

Zur Lösung dieser Aufgabe ist die Steuervorrichtung der
eingangs genanntgen Art erfindungsgemäß gekennzeichnet durch
die Merkmale des Patentanspruches 1.

Mit dieser Steuervorrichtung wird eine besonders einfache, den
natürlichen Steuerbewegungen der Bedienungsperson entsprechende
Steuerung ermöglicht, die bei sehr kleinen Steuerbewegungen
eine sehr schnelle und bequeme Einhandsteuerung gestattet und
durch zweckentsprechende Wahl der Anzahl und Anordnung der Neigungsschalter den Anforderungen des Einzelfalles optimal angepaßt werden kann.

Vorteilhafte weitere Ausgestaltungen der Steuervorrichtung sind
in den Unteransprüchen beschrieben.

Im folgenden wird eine bevorzugte Ausführungsform der Steuervorrichtung unter Bezugnahme auf die beigefügten Zeichnungen weiter erläutert. Es zeigen:

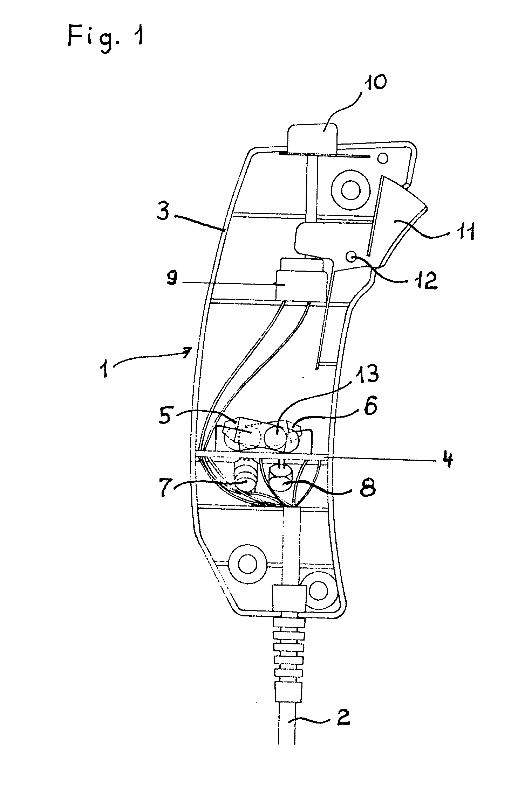

Fig. 1    einen schematischen Längsschnitt durch eine Steuervorrichtung,
Fig. 2    eine schematische Aufsicht auf die Oberseite der die
          Neigungsschalter tragenden Platine und
Fig. 3    eine schematische Ansicht der Unterseite der die Neigungsschalter tragenden Platine.

Die in den Figuren dargestellte Steuervorrichtung ist als im
Betrieb frei in der Bedienungshand zu tragendes Griffteil 1
mit einem hohlen Griffgehäuse 3 und einem aus dessen unteren
Ende herausgeführten Verbindungskabel 2 ausgebildet. Das Griffgehäuse 3 besitzt eine dem Griff einer Pistole ähnliche, im
Betrieb von den Fingern der Bedienungshand umschlossene Form
mit einer am oberen Ende angeordneten Schalttaste 10 und einer
an der im Betrieb von der Bedienungsperson abgewandten Seite
angeordneten, um eine Drehachse 12 schwenkbaren Schalttaste 11.
Beide Schalttasten 10 und 11 wirken in an sich bekannter Weise
auf einen im Griffgehäuse 3 angeordneten Mikroschalter 9. Im
Griffgehäuse 3 ist ferner eine quer zu dessen Längsachse verlaufende Platine 4 angebracht, die auf ihrer Oberseite zwei jeweils
unter einem Winkel von 10° in entgegengesetzter Richtung geneigte Quecksilber-Neigungsschalter 5 und 6 sowie an ihrer Unterseite
zwei quer zu diesen angeordnete, ebenfalls jeweils unter einem
Neigungswinkel von etwa 10° zur Platine 4 angeordnete Quecksilber-Neigungsschalter 7 und 8 trägt. Die Quecksilber-Neigungsschalter 5 bis 8 und der Mikroschalter 9 sind jeweils in üblicher
Weise über Verbindungsleitungen und das Verbindungskabel 2 mit
einem nicht dargestellten Computer verbunden, so daß die ausgelösten Steuersignale den Computer in entsprechender Weise
steuern.

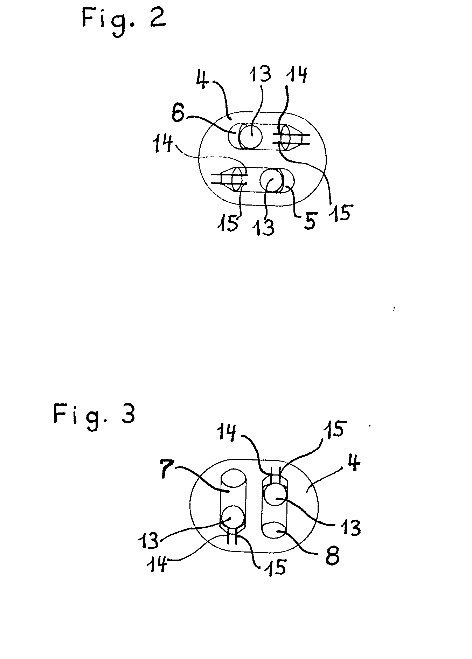

Wie insbesondere die Fig. 2 und 3 erkennen lassen, besitzt jeder
der vier Quecksilber-Neigungsschalter 5 bis 8 eine von einer an
beiden Enden verschlossenen, im wesentlichen rohrförmigen Wandung umschlossene Kammer, in die ein Quecksilbertropfen 13 verschiebbar eingeschlossen ist. An einem Ende der Kammer ragen
durch deren Wandung zwei beabstandete, elektrodenartige Anschlüsse
hinein, die bei entsprechender Neigungsstellung des Neigungsschalters
durch die Quecksilbertropfen leitend verbunden sind. An Stelle
der in den Figuren dargestellten, einfachen Ausführungsform der
Quecksilber-Neigungsschalter 5 bis 8 können natürlich je nach
den Anforderungen des Einzelfalles auch andere der in zahlrei-.
chen baulichen Modifikationen bekannten Neigungsschalter mit

**0 177 954**

darin verschiebbarer, elektrisch leitender Flüssigkeit verwendet werden. Hierzu können beispielsweise auch Neigungsschalter benutzt werden, die jeweils an ihren gegenüberliegenden Enden einen durch die Wandung hindurchgeführten Anschluß und einen weiteren zwischen diesen liegenden Anschluß aufweisen, so daß beim Neigen in jede der beiden entgegengesetzten Richtungen der mittlere Anschluß entweder mit dem einen oder mit dem anderen endständigen Anschluß leitend verbunden ist. Wesentlich ist dabei jedoch, daß mindestens zwei Neigungsschalter jeweils in unter vorbestimmten Winkeln relativ zueinander verlaufenden Neigungsrichtungen so geneigt ausgerichtet sind, daß bei jeder einen vorbestimmten Neigungswinkel überschreitenden Neigung des Griffteils 1 eine der jeweils gewählten Neigungsrichtung entsprechendes Steuersignal erzeugt wird.

Die vorstehend unter Bezugnahme auf eine bevorzugte Ausführungsform beschriebene Steuervorrichtgung kann zur weiteren Erleichterung und Verbesserung der Bedienung auch ohne Verbindungskabel mit einer drahtlosen Signal-Übertragungsvorrichtung ausgestattet sein, durch welche die Steuersignale beispielsweise mittels Infrarotstrahlung oder andere verzögerungsarme Übertragungsweisen zum Computer übertragen werden.

Aktenzeichen: Neuanmeldung
Anmelder:     John Hall Trading GmbH


PATENTANSPRÜCHE


1) Steuervorrichtung für Computer, insbesondere zur Cursor-
   Steuerung auf einem Bildschirm, mit einem manuell zwischen
   einer Grundstellung und mehreren Schaltstellungen bewegbaren Handgriff und jeweils in vorbestimmten Schaltstellungen
   des Handgriffs betätigten Schaltorganen zur Erzeugung entsprechender Steuersignale an den Computer, dadurch gekennzeichnet, daß
   a) die ganze Steuervorrichtung als frei in der Bedienungshand zu tragendes Griffteil (1) mit einem flexiblen Verbindungskabel (2) oder einer drahtlosen Signal-Übertragungsvorrichtung zum Computer ausgebildet ist,
   b) das Griffteil (1) ein Griffgehäuse (3) und mindestens
      zwei darin angeordnete elektrische Neigungsschalter (5 bis 8)
      mit jeweils einer in einer isolierenden Kammer beweglichen,
      elektrisch leitenden Flüssigkeit (13), insbesondere Quecksilber, zur leitenden Verbindung von beabstandet in die
      Kammer hineinragenden Anschlüssen (14,15) in Abhängigkeit von der Neigungsstellung des betreffenden Neigungsschalters
(5 bis 8) aufweist und

c) die Neigungsschalter (5 bis 8) im Griffgehäuse (3)
relativ zu einer in der Grundstellung des Griffteils (1)
horizontalen Ebene (4) jeweils in zugeordneten, unter
vorbestimmten Winkeln zueinander verlaufenden Neigungsrichtungen so geneigt ausgerichtet sind, daß in der Grundstellung
des Griffteils (1) kein Steuersignal entsteht, jedoch bei
jedem einen vorbestimmten Neigungswinkel überschreitenden
Neigen des Griffteils (1) in eine von mehreren verschiedenen Neigungsrichtungen durch Flüssigkeitsverschiebung
im zugeordneten Neigungsschalter (5 bis 8) ein der gewählten Neigungsrichtung entsprechendes Steuersignal erzeugt wird.

2) Steuervorrichtung nach Anspruch 1, dadurch gekennzeichnet,
daß im Griffgehäuse (3) vier Neigungsschalter (5 bis 8) relativ zu einer in der Grundstellung des Griffteils (1) horizontalen Ebene in zueinander rechtwinkligen Neigungsrichtungen jeweils so geneigt ausgerichtet sind, daß beim Neigen
des Griffteils (1) aus seiner Grundstellung um einen vorbestimmten Neigungswinkel zwischen 5 und 20° in jede der vier
zueinander rechtwinklig verlaufenden Neigungsrichtungen durch
stromleitendes Schließen des zugeordneten Neigungsschalters
(5 bis 8) ein entsprechendes Steuersignal erzeugt wird.

3) Steuervorrichtung nach Anspruch 2, dadurch gekennzeichnet,
daß die vier Neigungsschalter (5 bis 8) im Griffgehäuse (3)
auf den voneinander abgewandten Flächen einer in der Grundstellung des Griffteils (1) horizontalen Platine (4) jeweils
paarweise entgegengesetzt geneigt angeordnet sind.

4) Steuervorrichtung nach Anspruch 1, dadurch gekennzeichnet,
daß im Griffgehäuse (3) zwei Neigungsschalter mit jeweils
mindestens drei Anschlüssen so ausgerichtet sind, daß jeder
der beiden Neigungsschalter beim Neigen in jede von zwei
einander entgegengesetzten Neigungsrichtungen jeweils ein der gewählten Neigungsrichtung entsprechendes Steuersignal erzeugt.

5) Steuervorrichtung nach Anspruch 1, dadurch gekennzeichnet, daß im Griffgehäuse (3) drei Neigungsschalter in zueinander unter Winkeln von etwa 120° verlaufenden Neigungsrichtungen geneigt angeordnet sind.

6) Steuervorrichtung nach einem der Ansprüche 1 bis 5, dadurch gekennzeichnet, daß die Neigungsschalter (5 bis 8) jeweils eine von einer nichtleitenden rohrartigen Wandung umschlossene Kammer mit jeweils zwei an einem Ende beabstandet durch deren Wandung geführten Anschlüssen (14,15) aufweisen, die nach Neigen des Griffteils (1) um einen vorbestimmten Neigungswinkel in die zugeordnete Neigungsrichtung durch Verschiebung eines in der Kammer enthaltenen Quecksilbertropfens (13) leitend verbunden sind.

7) Steuervorrichtung nach einem der Ansprüche 1 bis 6, gekennzeichnet durch mindestens eine am Griffgehäuse (3) angeordnete Schalttaste (10,11) sowie jeweils einen im Griffgehäuse (3) angeordneten, durch die zugeordnete Schalttaste (10,11) betätigten Schalter (9) zur Auslösung gesonderter Befehlssignale an den Computer.

8) Steuervorrichtung nach Anspruch 7, dadurch gekennzeichnet, daß an dem im Betrieb aus der umschließenden Bedienungshand daumenseitig herausragenden Ende des Griffgehäuses (3) mindestens eine durch den Daumen der Bedienungshand betätigbare Schalttaste (10) angebracht ist.

9) Steuervorrichtung nach einem der Ansprüche 1 bis 8, dadurch gekennzeichnet, daß im Griffgehäuse (3) eine an dem im Betrieb aus der Bedienungshand herausragenden Ende des Griffgehäuses (3) zu der von der Bedienungsperson abgewandten Seite wirkende Signal-Übertragungsvorrichtung zur drahtlosen

**0 177 954**

Übertragung der von den Neigungsschaltern (5 bis 8) und gegebenenfalls den Schalttasten (10,11) ausgelösten Signalen
zum Computer vorgesehen ist.

Fig. 1

0 177 954

1/2

Fig. 2

Fig. 3